(19) **Europäisches Patentamt**
**European Patent Office**
**Office européen des brevets**

(11) **EP 2 544 173 A2**

(12) **EUROPEAN PATENT APPLICATION**

(43) Date of publication:
**09.01.2013 Bulletin 2013/02**

(51) Int Cl.:
***G09G 5/00*** (2006.01)

(21) Application number: **12162194.0**

(22) Date of filing: **29.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.07.2011 KR 20110068050**

(71) Applicant: **Samsung Electronics Co., Ltd.**
**Suwon-si, Gyeonggi-do, 443-742 (KR)**

(72) Inventors:
 • **Choi, Won-yong**
  **Seoul (KR)**

 • **Lee, Hong-chul**
  **Gyeonggi-do (KR)**
 • **Oh, Ki-hun**
  **Gyeonggi-do (KR)**
 • **Cho, Young-gon**
  **Gyeonggi-do (KR)**

(74) Representative: **Robinson, Ian Michael**
 **Appleyard Lees**
 **15 Clare Road**
 **Halifax HX1 2HY (GB)**

(54) **Image display apparatus and method for controlling the image display apparatus**

(57)    An image display apparatus includes: an interface unit which receives an image signal; a main controller which performs a control operation for processing the image signal in a normal mode state; a sub-controller which performs a control operation for providing a low power service in a power saving mode state; and a switch unit which connects the interface unit to the main controller in the normal mode state and is switched in the power saving mode state to connect the interface unit to the sub-controller.

# FIG. 1

EP 2 544 173 A2

**Description**

**CROSS-REFERENCE TO RELATED APPLICATION**

This application claims priority from Korean Patent Application No. 10-2011-0068050, filed on July 8, 2011, in the Korean Intellectual Property Office.

**BACKGROUND**

**1. Field**

Apparatuses consistent with the exemplary embodiments relate to an image display apparatus and a method for controlling the image display apparatus, and, more particularly, to an image display apparatus which minimizes power consumed in a power saving mode state, and a method for controlling the image display apparatus.

**2. Description of the Related Art**

In the rapidly developing field of image display apparatuses, many types of new functions have recently appeared. One such new function includes a function to reduce the amount of power consumed by the image display apparatus.
Because such a function may be an important discriminator to the environmentally conscious consumer, the importance of the power saving mode function has grown.
In a conventional image display apparatus, when a sync signal or a clock signal constituting an image signal has not been sensed for a predetermined time, the conventional image display apparatus goes into a power saving mode state.
In the case of the conventional image display apparatus, however, power is still applied to one or more chips that are not used in sensing the sync signal or the clock signal, and an activation state is still maintained. Therefore, the total amount of power expended, even in the power saving mode state, includes a considerable amount that is wasted due to providing power to chips that are not used in sensing the sync signal or the clock signal.

**SUMMARY**

According to the present invention there is provided an apparatus and method as set forth in the appended claims. Other features of the invention will be apparent from the dependent claims, and the description which follows. One or more exemplary embodiments may overcome the above disadvantages. Other disadvantages not described above may also be overcome. However, it will be appreciated that not every exemplary embodiment necessarily overcomes any of the problems described above.
One or more exemplary embodiments provide an image display apparatus which performs a control operation for processing an image signal in a normal mode state through a main controller and a control operation for providing a low power service in a power saving mode state through a sub-controller, and a method for controlling the image display apparatus.
According to an aspect of an exemplary embodiment, there is provided an image display apparatus. The image display apparatus may include: an interface unit which receives an image signal; a main controller which performs a control operation for processing the image signal in a normal mode state; a sub-controller which performs a control operation for providing a low power service in a power saving mode state; and a switch unit which connects the interface unit to the main controller in the normal mode state and is switched in the power saving mode state to connect the interface unit to the sub-controller.
The interface unit may include an analog input port which receives an analog image signal and a digital input port which receives a digital image signal. The switch unit may include a first switch which is disposed on a first line between the analog input port and the main controller and a second switch which is disposed on a second line between the digital input port and the main controller.
The digital input port may be a high definition multimedia interface (HUMI) input port. The second line may include at least one pair of transmission lines, wherein a differential impedance between the transmission lines has been adjusted to within a preset threshold range.
The digital input port may be a HDMI input port. The second line may include at least one pair of transmission lines and impedance compensators which are respectively connected to the transmission lines to adjust a differential impedance between the transmission lines to within a preset threshold range.
When the image signal is not received for a preset time in the normal mode state, the main controller may transmit a power saving mode change request to the sub-controller. When the sub-controller receives the power saving mode change request, the sub-controller may control the switch unit to provide the image signal to the sub-controller and inactivate the main controller.

When the image signal is not received for a preset time in the normal mode state, the main controller may control the switch unit to provide the image signal to the sub-controller, and then change to an inactive state.

When the image signal is received from the interface unit in the power saving mode state, the sub-controller may change from the power saving mode state to the normal mode state to activate the main controller, and also control the switch unit to connect the interface unit to the main controller.

The image display apparatus may further include: an image processor which includes the main controller and performs image processing with respect to the image signal input in the normal mode state; a Transition Minimized Differential Signal (TDMS) switch unit which is connected to the switch unit and connects one of a plurality of digital input ports of the interface unit to the main controller in the normal mode state; and a power supply unit which supplies power to the image display unit, wherein when the normal mode state is changed to the power saving mode state, the sub-controller controls the power supply unit to interrupt the power supplied to at least one of the main controller, the image processor, and the TDMS switch unit.

When the image signal is received from the interface unit in the normal mode state, the sub-controller may control the power supply unit to supply power to the main controller, the image processor, and the TDMS switch unit.

The low power service may include interrupting the power to the image display apparatus and/or changing an external input source of the image display apparatus.

According to an aspect of another exemplary embodiment, there is provided a method, for controlling an image display apparatus that includes an interface unit which receives an image signal, a main controller which performs a control operation for processing the image signal in a normal mode state, and a sub-controller which performs a control operation for providing a low power service in a power saving mode state. The method may include: connecting the interface unit to the main controller in the normal mode state; and when the normal mode state is changed to the power saving mode state, connecting the interface unit to the sub-controller.

The interface unit may include an analog input port which receives an analog image signal and a digital input port which receives a digital image signal. The switch unit may include a first switch, which is disposed on a first line between the analog input port and the main controller, and a second switch which is disposed on a second line between the digital input port and the main controller.

The digital input port may be a HDMI input port. The second line may include at least one pair of transmission lines, wherein a differential impedance between the transmission lines has been adjusted to within a preset threshold range.

The digital input port may be a HDMI input port. The second line may include at least one pair of transmission lines and impedance compensators which are respectively connected to the transmission lines to adjust a differential impedance of the transmission lines to within a preset threshold range.

The method may further include: when the image signal is not received for a preset time in the normal mode state, transmitting a power saving mode change request from the main controller to the sub-controller; and when the sub-controller receives the power saving mode change request, controlling the switch unit through the sub-controller to provide the image signal to the sub-controller, and inactivating the main controller.

The method may further include: when the image signal is not received for a preset time in the normal mode state, controlling the switch unit, with the main controller, to provide the image signal to the sub-controller, and then changing the main controller to an inactive state.

The method may further include: when the image signal is received from the interface unit in the power saving mode state, changing the sub-controller from the power saving mode state to the normal mode state, to activate the main controller, and controlling the switch unit to provide the image signal from the interface unit to the main controller.

The image display apparatus may further include: an image processor which includes the main controller and performs image processing with respect to the image signal input in the normal mode state; a TDMS switch unit which is connected to the switch unit and connects one of a plurality of digital input ports of the interface unit to the main controller in the normal mode state; and a power supply unit which supplies power to the image display apparatus, wherein the method further comprises: when the normal mode state is changed to the power saving mode state, controlling the power supply unit through the sub-controller to interrupt power supplied to at least one of the main controller, the image processor, and the TDMS switch unit.

The method may further include: controlling the power supply unit through the sub-controller to supply power to the main controller, the image processor, and the TDMS switch unit, when the image signal is received from the interface unit in the power saving mode state.

The low power service may include interrupting the power of the image display apparatus and/or changing an external input source of the image display apparatus.

As described above, according to the exemplary embodiments, the power supplied to the main controller, the TDMS switch unit, and the image processor may be interrupted. Also, the control operation for providing the low power service may be performed by using only the sub-controller. Therefore, the power consumed by the image display apparatus in the power saving mode state may be minimized.

Additional aspects and advantages of the exemplary embodiments will be set forth in the detailed description, will be clear from the detailed description, or may be learned by practicing the exemplary embodiments.

## BRIEF DESCRIPTION OF THE DRAWING FIGURES

In the accompanying drawings:

FIG. 1 is a block diagram illustrating a structure of an image display apparatus according to an exemplary embodiment;

FIG. 2 is a block diagram illustrating a detailed structure of the image display apparatus, according to an exemplary embodiment;

FIGS. 3A and 3B are circuit diagrams illustrating some elements of the image display apparatus, according to an exemplary embodiment; and

FIG. 4 is a flowchart illustrating a method for controlling an image display apparatus according to an exemplary embodiment.

## DETAILED DESCRIPTION

Hereinafter, various exemplary embodiments will be described with reference to the accompanying drawings.

In the following description, like reference numerals are used for the same elements. Various details mentioned below are given to help provide a comprehensive understanding of the exemplary embodiments. Thus, it will be appreciated that the exemplary embodiments can be carried out without such details. Also, functions or elements known to those who are familiar with this field are not described in detail since they might obscure the teachings of exemplary embodiments with unnecessary detail.

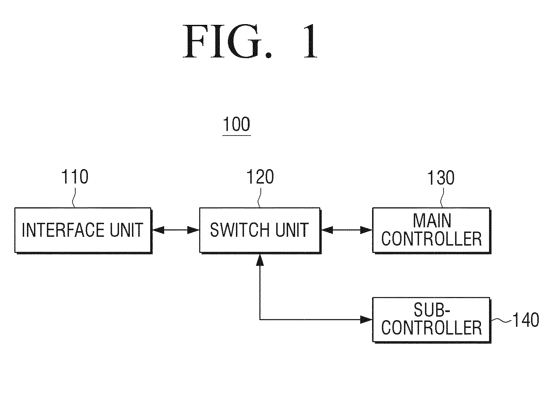

FIG. 1 is a block diagram illustrating the structure of an image display apparatus 100, according to an exemplary embodiment. Referring to FIG. 1, the image display apparatus 100 includes an interface unit 110, a switch unit 120, a main controller 130, and a sub-controller 140.

The interface unit 110 receives an image signal. The interface unit 110 includes an analog input port, which is to receive an analog image signal. The interface unit 110 also includes a digital input port, which is to receive a digital image signal. Thus, the interface unit 110 can operate as an input source that receives an image signal and an audio signal from an external device.

The switch unit 120 connects the interface unit 110 to the main controller 130 in a normal mode state. The switch unit 120, when in a power saving mode state, connects the interface unit 110 to the sub-controller 140.

The main controller 130 performs a control operation for processing the image signal in the normal mode state. Here, the normal mode state refers to a general mode in which an image is displayed, based on the image signal input via the image display apparatus 100.

Therefore, the main controller 130 typically controls the various elements of the image display apparatus 100. In more detail, the main controller 130 may control an image processor (not shown) to perform signal processing, such as video decoding, video scaling, audio decoding, etc., with respect to the image signal and the audio signal received through the interface unit 110. Also, the main controller 130 may control a display unit (not shown) and an audio output unit (not shown) to output the processed image and the audio signals.

In this exemplary embodiment, when the image signal is not received for a preset time in the normal mode state, the normal mode state changes to the power saving mode state.

The power saving mode state refers to a display power management setup mode (DPMS) and interrupts the power applied to the elements of the image display apparatus 100. The purpose of interrupting the power applied to these elements is to avoid unnecessary power consumption, and it is appropriate to carry out such conservation of energy when no image signal is input for a predetermined time.

For this purpose, when the image signal is not received for the preset amount of time, the main controller 130 transmits a power saving mode change request to the sub-controller 140. Alternatively, the main controller 130 may control the switch unit 120 to provide the image signal to the sub-controller 140 and subsequently change to an inactive state.

When the sub-controller 140 receives the power saving mode change request from the main controller 130, the sub-controller 140 controls the switch unit 120 to provide the image signal to the sub-controller 140, and also inactivates the main controller 130.

In this case, the sub-controller 140 may interrupt the power which is supplied to various elements including the main controller 130, a transition minimized differential signal (TDMS) switch unit (not shown), an image processor (not shown), and a display unit. Here, the TDMS switch unit is a unit that is connected to the switch unit 120, and transmits one of the digital image signals, which are input through a plurality of digital input ports, to the main controller 130. Also, the image processor performs image processing with respect to the input image signal, and the display unit displays the signal-processed image signal.

The sub-controller 140 may also perform a control operation for providing a low power service when in the power saving mode state. Here, the concept of a low power service refers to a minimum feedback operation in response to a user command input when the image display apparatus 100 is in the power saving mode state. For example, a low-power service may include interrupting the power of the image display apparatus 100. Another example of a low-power service includes changing the external input source change of the image display apparatus 100.

When the image signal is received from the interface unit 110, and the image display apparatus 100 is in the power saving mode state, the sub-controller 140 changes the power saving mode state to the normal mode state in order to activate the main controller 130 and two control the switch unit 120 to connect the interface unit 110 with the main controller 130.

In this case, the sub-controller 140 may control the power so as to be re-supplied to the main controller 130, the TDMS switch unit, the image processor, and the display unit.

As described above, according to the exemplary embodiment, in the power saving mode state, the power that was previously being supplied to the main controller 130, the TDMS switch unit, the image processor, and the display unit is interrupted. Also, the sub-controller 140 performs the control operation for providing the low power service. Therefore, the power consumed by the image display apparatus 100 may be minimized (e.g., to be lower than or equal to 1W) in the power saving mode state.

As described above, the interface unit 110 may include an analog input port and a digital input port.

Therefore, the switch unit 120 may include a first switch (not shown) which is disposed on a first line between the analog input port and the main controller 130, and a second switch (not shown) which is disposed on a second line between the digital input port and the main controller 130.

In this case, if the digital input port is a high definition multimedia interface (HDMI) input port, the second line between the HDMI input port and the main controller 130 may include at least one pair of transmission lines, wherein differential impedance between the transmission lines of each pair has been adjusted to within a preset threshold range.

If the digital input port is the HDMI input port, the second line between the HDMI input port and the main controller 130 may include at least one pair of transmission lines and impedance compensators which are respectively connected to the transmission lines to adjust a differential impedance between each pair of the transmission lines to within a preset threshold range.

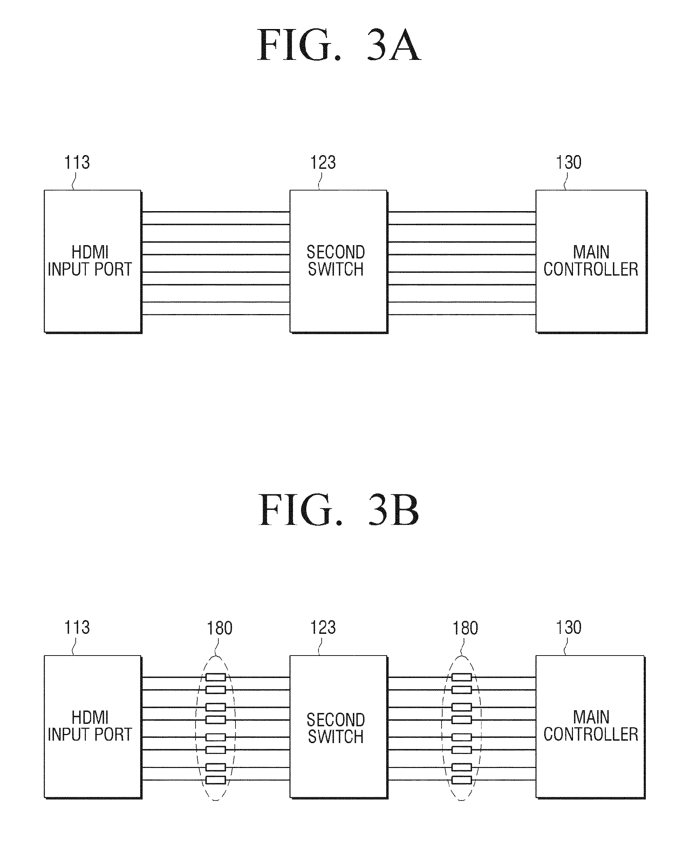

This will be described in more detail later with reference to FIGS. 3A and 3B.

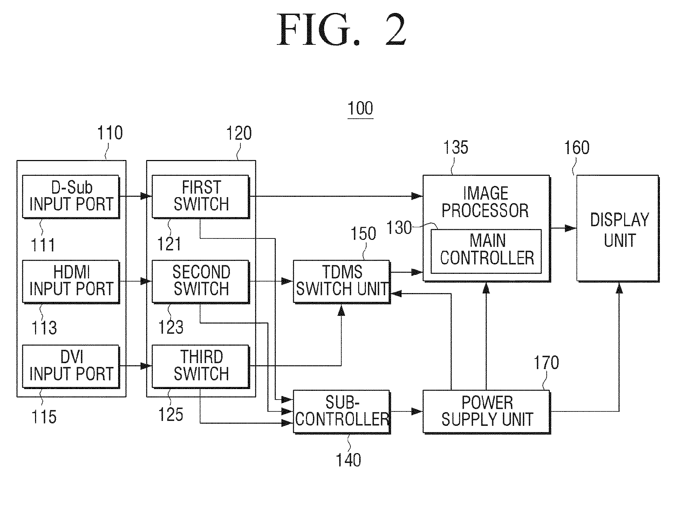

FIG. 2 is a block diagram illustrating a detailed structure of the image display apparatus 100, according to an exemplary embodiment. Referring to FIG. 2, the image display apparatus 100 includes the interface unit 110, the switch unit 120, the main controller 130, an image processor 135, the sub-controller 140, a TDMS switch unit 150, a display unit 160, and a power supply unit 170.

The interface unit 110 connects the image display apparatus 100 to an external device. In more detail, the interface unit 110 includes at least one input port, which is to be connected to at least one external device, to operate as an input source which is to receive an image signal and an audio signal from the external device.

As shown in FIG. 2, in the exemplary embodiment, the interface unit 110 includes a D-Sub input port 111 which is to receive an analog image signal, and a HDMI input port 113 and a digital visual interface (DVI) input port 115 which are to receive digital image signals.

In more detail, the D-Sub input port 111 receives analog red (R), green (G), and blue (B) image signals and horizontal/vertical (H/V) sync signals from the external device. The HDMI input port 113 and the DVI input port 115 receive digital R, G, and B image signals and clock signals $Tx0\pm$, $Tx1\pm$, $Tx2\pm$, and $TcX\pm$.

In this exemplary embodiment, the interface unit 110 includes the D-Sub input port 111, the HDMI input port 113, and the DVI input port 115. This, however, is only an example; the interface unit 110 may further include other types of input ports.

For example, the interface unit 110 may also include an S-Video input port, a component input, a composite input, and so on.

The switch unit 120 connects the interface unit 110 to the main controller 130, when the image display apparatus 100 is in a normal mode state. The switch unit 120 is switched, when in a power saving mode state, so as to connect the interface unit 110 to the sub-controller 140.

According to this exemplary embodiment, the switch unit 120 includes first, second, and third switches 121, 123, and 125.

Here, the first switch 121 is disposed on a first line between an analog input port and the main controller 130, and the second switch 123 is disposed on a second line between a digital input port and the main controller 130. Also, the third switch 125 is disposed on a third line between a digital input port and the main controller 130.

Therefore, in the normal mode state, the first switch 121 connects the D-Sub input port 111 to the main controller 130, and the second switch 123 connects the HDMI input port 113 to the main controller 130 through the TDMS switch unit 150. Also, in the normal mode state, the third switch 125 connects the DVI input port 115 to the main controller 130 through the TDMS switch unit 150.

In the power saving mode state, the first, second, and third switches 121, 123, and 125 respectively connect the D-Sub input port 111, the HDMI input port 113, and the DVI input port 115 to the sub-controller 140.

Therefore, an input image signal may be transmitted to the main controller 130 when the image display apparatus 100 is in the normal mode state, and to the sub-controller 140 when the image display apparatus 100 is in the power saving mode state.

The above-described operation of the switch unit 120 may be controlled by the main controller 130 or the sub-controller 140.

In this exemplary embodiment, the first switch unit 120 includes the first, second, and third switches 121, 123, and 125. This, however, is only an example. Therefore, if the interface unit 110 further includes another type of input port, the switch unit 120 may further include a switch which is connected to the corresponding input port. Even in this instance, the corresponding input port may be connected to the main controller 130 or the sub-controller 140, depending on whether or not the image display apparatus 100 is in the normal mode state or the power saving mode state.

The TDMS switch unit 150 is connected to the switch unit 120 and connects one of a plurality of digital input ports of the interface unit 110 to the main controller 130 in the normal mode state.

In more detail, the TDMS switch unit 150 may transmit one of an image signal of a HDMI format, which is input through the second switch 123, and an image signal of a DVI format, which is input through the third switch 125, to the main controller 130 in the normal mode state. Therefore, the TDMS switch unit 150 may include a multiplexer (MUX) (not shown) which is to select and output one of a plurality of input digital image signals.

The main controller 130 controls the overall operations of elements of the image display apparatus 100. In particular, the main controller 130 may be realized as a microcomputer (Micom), a central processing unit (CPU), a machine control unit (MCU), or the like, to control the elements of the image display apparatus 100 so as to display an image signal, which is input in the normal mode state, on a screen of the display unit 160.

In more detail, the main controller 130 may control the image processor 135 to perform signal processing, such as video decoding, video scaling, audio decoding, etc., with respect to the image and audio signals input through the interface unit 110 and control the display unit 160 and an audio output unit (not shown) to respectively output the signal-processed image and audio signals.

The main controller 130, which performs the above-described functions, may be included as part of the image processor 135.

The image processor 135 may include the main controller 130 to perform image processing with respect to the image signal, which is input in the normal mode state, under control of the main controller 130.

In more detail, the image processor 135 may process an image signal of a D-Sub format, which is input through the first switch 121, an image signal of a HDMI format, or an image signal of a DVI format, which is input through the TDMS switch unit 150, according to the standards of the display unit 160, when the image display apparatus 100 is in the normal mode state.

For this purpose, the image processor 135 may include a decoder (not shown) and a scaler (not shown). In this context, the decoder decodes the image signal input in the normal mode state, and the scaler adjusts a vertical frequency, a resolution, and a picture ratio according to output standards of the display unit 160. Therefore, the image processor 135 may convert an image signal into a signal which may be output through the screen of the display unit 160.

When the image signal is not received for a preset time in the normal mode state, the main controller 130 changes from the normal mode state to the power saving mode state. In other words, when the image signal is not received for the preset time through an input port which is selected according to a user command, the main controller 130 controls the image display apparatus 100 to change from the normal mode state to the power saving mode state.

In more detail, the main controller 130 may monitor whether a sync signal (i.e., a horizontal or vertical sync signal) or a clock signal is received for a preset time, through an input port selected by a user, when the image display apparatus 100 is in the normal mode state. Also, when the sync signal or the clock signal is not received for the preset time, the main controller 130 may generate a control signal for a power saving mode change request and transmit the control signal to the sub-controller 140.

When the sub-controller 140 receives the power saving mode change request from the main controller 130, the sub-controller 140 controls the switch unit 120 to connect the interface unit 110 to the sub-controller 140 and interrupts the power that was being supplied to the elements of the image display apparatus 100.

In more detail, when the sub-controller 140 receives the power saving mode change request, the sub-controller 140 may control the power supply unit 170 to interrupt the power to the main controller 130, the image processor 140, the TDMS switch unit 150, and the display unit 160.

The sub-controller 140 may also perform a control operation for providing a low power service in the power saving mode state. Here, a low power service is a minimum feedback operation for a user command, input in the power saving mode (i.e., may refer to a power interruption of the image display apparatus 100, an external input source change of the image display apparatus 100, or the like).

For example, when the sub-controller 140 receives a command, which is to interrupt the power of the image display apparatus 100, from the user in the power saving mode state, the sub-controller 140 may control to interrupt the power supplied to all of the elements of the image display apparatus 100 so as to interrupt the power of the image display apparatus 100.

As another example, when the sub-controller 140 receives a command, which is to change an input source, from the user in the power saving mode state, the sub-controller 14 may control to select the corresponding input source.

For this purpose, the sub-controller 140 may control the power supply unit 170 to supply the power to an input unit (not shown) which receives a user command in the power saving mode state.

Also, when the sub-controller 140 receives the image signal from the interface unit 110 in the power saving mode state, the sub-controller 140 changes from the power saving mode state to the normal mode state.

As described above, the switch unit 120 connects the interface unit 110 to the sub-controller 140 under control of the sub-controller 140 in the power saving mode state. Therefore, the sub-controller 140 may monitor whether either the sync signal (at least one of the horizontal and vertical sync signals) or the clock signal is received through the input port selected by the user in the power saving mode state.

When the sync signal or the clock signal is received in the power saving mode state according to the monitoring result, the sub-controller 140 may control the power supply unit 170 to re-supply power to the main controller 130, the image processor 135, the TDMS switch unit 150, and the display unit 160.

The sub-controller 140 controls the switch unit 120 to connect the interface unit 110 to the main controller 130 so as to transmit the image signal, which is input through the input port selected by the user, to the main controller 130.

Therefore, the image signal, which is re-input from the input port selected by the user, may be processed by the image processor 130 and displayed on the screen of the display unit 160.

The sub-controller 140, which performs the above-described functions, may be realized as a Micom, a CPU, a MCU, or the like.

The sub-controller 140 may include an analog-to-digital converter (ADC) to detect the received sync signal or clock signal. In other words, the sub-controller 140 may convert the sync signal or the clock signal received in the power saving mode into a digital signal and determine whether the sync signal or the clock signal is received in the power saving mode state, based on the digital signal.

As another example, it is assumed that a command to change an input source is input from the user in the power saving mode, and an image signal is input from the changed input source through an input port.

In this case, the image signal input from the changed input source is input into the sub-controller 140 through the switch unit 120 in the power saving mode state.

Therefore, the sub-controller 140 controls the power supply unit 170 to re-supply the power to the main controller 130, the image processor 135, the TDMS switch unit 150, and the display unit 160. Also, the sub-controller 140 controls the switch unit 120 to connect the interface unit 110 to the main controller 130 so as to transmit the image signal input through the changed input source to the main controller 130.

In the above-described exemplary embodiments, when the image signal is not received for the preset time through the input port selected by the user, the main controller 130 transmits the power saving mode change request to the sub-controller 140. Also, the sub-controller 140 controls a switching operation of the switch unit 120 according to the power saving mode change request and controls the power supply unit 170 to interrupt the power supplied to the main controller 130.

However, this is only an example, and thus the main controller 130 may control the switch unit 120 and the power supply unit 170. In more detail, when the image signal is not received for the preset time through the input port selected by the user, the main controller 130 may control the switch unit 120 to connect the interface unit 110 to the sub-controller 140 and control the power supply unit 170 to interrupt supplied power.

Also, in the above-described exemplary embodiment, the main controller 130 is included in the image processor 135, but this is only an example. Therefore, the main controller 130 may be installed separately from the image processor 135.

The display unit 160 displays the image signal input from the image processor 135. The display unit 160 may be realized as a liquid crystal display (LCD) panel as in a general display apparatus and may include detailed structures such as a panel driver (not shown), a display panel (not shown), a backlight driver (not shown), a backlight emitter (not shown), and so on.

In this case, since the sub-controller 140 interrupts the power supplied to the display unit 160 in the power saving mode state, the power is not supplied to the panel driver, the display panel, the backlight driver, and the backlight emitter.

The power supply unit 170 supplies power to the image display apparatus 100. A power state of the power supply unit 170 may be controlled by the main controller 130 in the normal mode state and may be controlled by the sub-controller 140 in the power saving mode state.

The image display apparatus 100 according to the preset exemplary embodiment may further include a storage unit (not shown) which stores various types of programs necessary for operating the image display apparatus 100 and may be realized as a memory, a hard disk drive (HDD), or the like.

FIGS. 3A and 3B are circuit diagrams illustrating some elements of the image display apparatus 100, according to an exemplary embodiment. In more detail, FIGS. 3A and 3B are circuit diagrams illustrating connection relations among the HDMI input port 113, the second switch 123, and the main controller 130. For the descriptive convenience, the TDMS switch unit 150 will be omitted.

In general, a HDMI connection port and a HDMI receiver are connected to each other through four pairs of transmission lines. Here, the three pairs of transmission lines are used to transmit data, and the one pair of transmission line is used to transmit a clock signal.

In this case, the differential impedance between the transmission lines of each pair of the four pairs of transmission lines, which are connected between the HDMI connection port and the HDMI receiver, must comply with standards defined in HDMI Compliance Test Specification Test ID 5-8.

In more detail, according to HDMI Compliance Test Specification Test ID 5-8, the differential impedance between the transmission lines of each pair of the four pairs of transmission lines, which connect the HDMI connection port and the HDMI receiver, is to be included within a range between 85 Ω and 115 Ω so as to comply with the standards.

A differential impedance between the one pair of transmission lines may be calculated as in Equation 1 below:

$$Z_{diff} = 2Z_0(1 - 0.48e^{-0.096\frac{S}{H}}) \tag{1}$$

where $Z_{diff}$ denotes the differential impedance, $Z_0$ denotes an impedance of each transmission line, S denotes a space between transmission lines of each pair, and H denotes a height from a ground layer of a lower part of a transmission line to a transmission line.

In the image display apparatus 100 according to the exemplary embodiment described with reference to FIGS. 1 and 2, the second switch 123 is connected between the HDMI input port 113 and the main controller 130.

Here, the second switch 123 may be realized as a passive element such as a capacitor, a resistor, or the like, and thus the differential impedance between each pair of transmission lines connecting the HDMI input port 113 and the main controller 130 may, as a result of the presence of the second switch 123, be changed to deviate from the standards defined in HDMI Compliance Test Specification Test ID 5-8.

Therefore, in order to solve this, the second switch 123 may be constituted by using a capacitor having a low capacitance and a resistor having a low resistance value. Alternatively, impedance compensators may be connected to transmission lines between the HDMI input port 113 and the main controller 130 to compensate for changed differential impedances.

In more detail, as shown in FIG. 3A, the second switch 123, which includes a capacitor having a low capacitance and a resistor having a low resistance value, may be used so that a differential impedance between each pair of transmission lines connecting the HDMI input port 113 and the main controller 130 is within a range between 90Ω and 110Ω.

In more detail, the second switch 123 may be designed so as to use a capacitor having a capacitance of 0.5 pF or less and a resistor having a resistance value of 5Q or less.

Also, as shown in FIG. 3B, impedance compensators 180 are connected to each pair of transmission lines between the HDMI input port 113 and the main controller 130 to compensate for differential impedances which are changed by the second switch 123.

In more detail, if differential impedances are decreased by the second switch 123, the impedance compensators 180 including resistors may be connected to each pair of transmission lines to compensate for the lowered differential impedances. If the differential impedances are increased by the second switch 123, the impedance compensators 180 including capacitors may be connected to each pair of transmission lines to compensate for the increased differential impedances.

In this case, capacitances of the capacitors and resistance values of the resistors of the impedance compensators 180 may be set so that the differential impedances changed by the second switch 123 are within a range between 90 Ω and 110 Ω.

According to another method, the widths of each pair of transmission lines connecting the HDMI input port 113 and the main controller 130 may be adjusted.

In other words, as in Equation 1, the differential impedances may be adjusted according to the widths of transmission lines. Therefore, if the differential impedances are decreased by the introduction of the second switch 123, the widths of each pair of transmission lines connecting the HDMI input port 113 and the main controller 130 may be narrowed. If the differential impedances are increased by the introduction of the second switch 123, the widths of each pair of transmission lines connecting the HDMI input port 113 and the main controller 130 may be widened.

Even in this case, the widths of each pair of transmission lines may be adjusted so that the differential impedances changed by the second switch 123 are within a range between 90 Ω and 110 Ω.

In the above-described exemplary embodiment, the differential impedances may be adjusted so as to be within the range between 90 Ω and 110 Ω in order to secure some margin and satisfy a standard range.

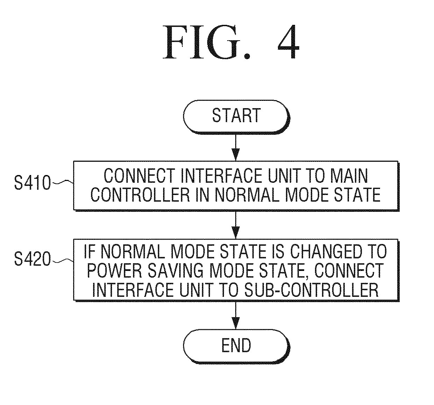

FIG. 4 is a flowchart illustrating a method for controlling an image display apparatus according to an exemplary embodiment.

The image display apparatus according to this exemplary embodiment includes: an interface unit which receives an image signal; a main controller which performs a control operation for processing the image signal in a normal mode state; and a sub-controller which performs a control operation for providing a low power service in a power saving mode state.

Therefore, in operation S210, the interface unit is connected to the main controller in the normal mode state.

When the normal mode state is changed to a power saving mode state, the interface unit is connected to the sub-controller in operation S220.

Here, the interface unit of the image display apparatus may include an analog input port which receives an analog image signal and a digital input port which receives a digital image signal. A switch unit may include a first switch which is disposed on a first line between the analog input port and the main controller and a second switch which is disposed on a second line between the digital input port and the main controller.

In this case, the digital input port may be a HDMI input port, and the second line may include at least one pair of transmission lines, wherein a differential impedance between the at least one pair of transmission lines has been adjusted to within a preset threshold range.

The digital input port may be a HDMI input port, and the second line may include at least one pair of transmission lines and impedance compensators which are respectively connected to the transmission lines to adjust differential impedances between the transmission lines to within a preset threshold range.

The method may further include: when the image signal is not received for a preset time in the normal mode state, transmitting a power saving mode change request from the main controller to the sub-controller; and when the power saving mode change request is received, controlling the switch unit through the sub-controller to provide the image signal to the sub-controller and inactivating the main controller.

The method may further include: when the image signal is not received for the preset time in the normal mode state, controlling the switch unit through the main controller to provide the image signal to the sub-controller and changing the sub-controller to an inactive state.

The method may further include: when the image signal is received from the interface unit in the power saving mode state, changing the sub-controller to the normal mode state to activate the main controller and controlling the switch unit to connect the interface unit and the main controller.

The image display apparatus may further include: an image processor which includes the main controller and performs image processing with respect to the image signal input in the normal mode state; a TDMS switch unit which is connected to the switch unit to connect one of a plurality of digital input ports of the interface unit to the main controller in the normal mode state; and a power supply unit which supplies the power to the image display apparatus.

The method may further include: when the normal mode state is changed to the power saving mode state, controlling the power supply unit through the sub-controller to interrupt the power supplied to at least one of the main controller, the image processor, and the TDMS switch unit.

In this case, the method may further include: when the image signal is received from the interface unit in the power saving mode state, controlling the power supply unit through the sub-controller to supply the power to the main controller, the image processor, and the TDMS switch unit.

In the method, a low power service may include at least one of a power interruption of the image display apparatus and an external input source change of the image display apparatus.

The above-described method may be realized by an image display apparatus according to an exemplary embodiment or another image receiving apparatus which does not include all of elements of the present image display apparatus.

A computer readable recording medium storing a program for executing a method for controlling an image display apparatus may include all types of physical recording devices which store data which can be read by a computer system. Examples of the computer readable recording medium include a ROM, a RAM, a CD-ROM, a magnetic tape, a floppy disk, an optical data storage device, etc. The computer readable recording medium can also be distributed over network coupled computer systems so that a computer readable code is stored and executed in a distributed fashion.

Although a few preferred embodiments have been shown and described, it will be appreciated by those skilled in the art that various changes and modifications might be made without departing from the scope of the invention, as defined in the appended claims.

**Claims**

1. An image display apparatus comprising:

   an interface unit which receives an image signal;
   a main controller which performs a control operation for processing the image signal in a normal mode state;
   a sub-controller which performs a control operation for providing a low power service in a power saving mode state; and
   a switch unit which connects the interface unit to the main controller in the normal mode state and is switched in the power saving mode state to connect the interface unit to the sub-controller.

2. The image display apparatus as claimed in claim 1, wherein:

   the interface unit comprises an analog input port which receives an analog image signal and a digital input port which receives a digital image signal; and
   the switch unit comprises a first switch which is disposed on a first line between the analog input port and the main controller and a second switch which is disposed on a second line between the digital input port and the main controller.

3. The image display apparatus as claimed in claim 2, wherein:

   the digital input port is a high definition multimedia interface (HDMI) input port; and
   the second line comprises at least one pair of transmission lines, wherein a differential impedance between the transmission lines has been adjusted within a preset threshold range.

4. The image display apparatus as claimed in claim 2 or 3, wherein:

   the digital input port is a HDMI input port; and
   the second line comprises at least one pair of transmission lines and impedance compensators which are respectively connected to the transmission lines to adjust a differential impedance between the transmission lines within a preset threshold range.

5. The image display apparatus as claimed in any one of claims 1 through 4, wherein:

   when the image signal is not received for a preset time in the normal mode state, the main controller transmits a power saving mode change request to the sub-controller; and
   when the sub-controller receives the power saving mode change request, the sub-controller controls the switch unit to provide the image signal to the sub-controller and inactivates the main controller.

6. The image display apparatus as claimed in any one of claims 1 through 4, wherein when the image signal is not received for a preset time in the normal mode state, the main controller controls the switch unit to provide the image signal to the sub-controller and changes to an inactivation state.

7. The image display apparatus as claimed in any one of claims 1 through 4, wherein when the image signal is received from the interface unit in the power saving mode state, the sub-controller changes from the power saving mode state to the normal mode state to activate the main controller and controls the switch unit to connect the interface unit to the main controller.

8. The image display apparatus as claimed in any one of claims 1 through 7, further comprising:

   an image processor which comprises the main controller and performs image processing with respect to the image signal input in the normal mode state;
   a Transition Minimized Differential Signal (TDMS) switch unit which is connected to the switch unit and connects one of a plurality of digital input ports of the interface unit to the main controller in the normal mode state; and

a power supply unit which supplies power to the image display unit,

wherein when the normal mode state is changed to the power saving mode state, the sub-controller controls the power supply unit to interrupt power supplied to at least one of the main controller, the image processor, and the TDMS switch unit.

9. The image display apparatus as claimed in claim 8, wherein when the image signal is received from the interface unit in the normal mode state, the sub-controller controls the power supply unit to supply power to the main controller, the image processor, and the TDMS switch unit.

10. The image display apparatus as claimed in any one of claims 1 through 4, wherein the low power service comprises at least one of a power interruption of the image display apparatus and an external input source change of the image display apparatus.

11. A method for controlling an image display apparatus which comprises an interface unit which receives an image signal, a main controller which performs a control operation for processing the image signal in a normal mode state, and a sub-controller which performs a control operation for providing a low power service in a power saving mode state, the method comprising:

connecting the interface unit to the main controller in the normal mode state; and
when the normal mode state is changed to the power saving mode state, connecting the interface unit to the sub-controller.

12. The method as claimed in claim 11, wherein:

the interface unit comprises an analog input port which receives an analog image signal and a digital input port which receives a digital image signal; and
the switch unit comprises a first switch which is disposed on a first line between the analog input port and the main controller and a second switch which is disposed on a second line between the digital input port and the main controller.

13. The method as claimed in claim 12, wherein:

the digital input port is a HDMI input port; and
the second line comprises at least one pair of transmission, wherein a differential impedance between the transmission lines has been adjusted within a preset threshold range.

14. The method as claimed in claim 12 or 13, wherein:

the digital input port is a HDMI input port; and
the second line comprises at least one pair of transmission lines and impedance compensators which are respectively connected to the transmission lines to adjust a differential impedance of the transmission lines within a preset threshold range.

15. The method as claimed in any one of claims 11 through 14, further comprising:

when the image signal is not received for a preset time in the normal mode state, transmitting a power saving mode change request from the main controller to the sub-controller; and
when the sub-controller receives the power saving mode change request, controlling the switch unit through the sub-controller to provide the image signal to the sub-controller and inactivating the main controller.

# FIG. 1

<u>100</u>

110              120              130

| INTERFACE UNIT | ⟷ | SWITCH UNIT | ⟷ | MAIN CONTROLLER |

SUB-CONTROLLER ~140

# FIG. 2

# FIG. 3A

```
   113                        123                        130
    │                          │                          │
┌─────────┐              ┌─────────┐              ┌─────────────┐
│         │              │         │              │             │
│  HDMI   │══════════════│ SECOND  │══════════════│    MAIN     │
│INPUT PORT│              │ SWITCH  │              │ CONTROLLER  │
│         │              │         │              │             │
└─────────┘              └─────────┘              └─────────────┘
```

# FIG. 3B

```
   113           180         123          180          130
    │             │           │            │            │
┌─────────┐    ┌┤┤┤┤┤      ┌─────────┐    ┤┤┤┤┤     ┌─────────────┐
│         │    │          │         │              │             │
│  HDMI   │════┤┤┤┤┤══════│ SECOND  │═══┤┤┤┤┤══════│    MAIN     │
│INPUT PORT│    │          │ SWITCH  │              │ CONTROLLER  │
│         │    └┤┤┤┤┤      │         │    ┤┤┤┤┤     │             │
└─────────┘                └─────────┘              └─────────────┘
```

# FIG. 4

START

S410 — CONNECT INTERFACE UNIT TO MAIN CONTROLLER IN NORMAL MODE STATE

S420 — IF NORMAL MODE STATE IS CHANGED TO POWER SAVING MODE STATE, CONNECT INTERFACE UNIT TO SUB-CONTROLLER

END

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110068050